# EUROPEAN PATENT SPECIFICATION

(11) **EP 4 610 149 B1**
(45) Date of publication and mention of the grant of the patent: **30.09.2026**
(21) Application number: 24202401.6
(22) Date of filing: 25.09.2024
(51) Int. Cl.: B62D 35/00, B62D 37/02, B60Q 1/26

(54) **VARIABLE SPOILER LIGHTING APPARATUS FOR VEHICLE**
VARIABLE SPOILERBELEUCHTUNGSVORRICHTUNG FÜR EIN FAHRZEUG
APPAREIL D'ÉCLAIRAGE À DÉFLECTEUR VARIABLE POUR VÉHICULE

(30) Priority: 27.02.2024 KR 20240028256
(43) Date of publication of application: 03.09.2025
(73) Proprietor: Hyundai Mobis Co., Ltd., Gangnam-gu Seoul 06141 (KR)
(72) Inventor: LEE, Soon Mo, 16891 Yongin-si, Gyeonggi-do (KR); KIM, Do Hyung, 16891 Yongin-si, Gyeonggi-do (KR); JOO, Chan Ho, 16891 Yongin-si, Gyeonggi-do (KR)
(74) Representative: Jung, Minkyu

(56) References cited:
- EP-A1- 3 760 484
- US-A- 5 923 245
- US-A1- 2018 257 543
- US-A1- 2024 017 665

## Description

### BACKGROUND

### Field

Exemplary embodiments of the present disclosure relate to a variable spoiler lighting apparatus for a vehicle, and more particularly, to a variable spoiler lighting apparatus for a vehicle, which may improve aerodynamic performance and provide visual information to a driver, a nearby vehicle, and a pedestrian.

### Description of the Related Art

A spoiler is often mounted on a vehicle. The spoiler prevents the vehicle from lifting off a road surface due to air vortices during high-speed driving, thereby enhancing a tire's grip on the road surface. In recent years, variable spoilers that may vary the position and direction thereof depending on the vehicle speed have emerged.

Conventional variable spoilers may only adjust a vertical tilting angle, and have difficulty in identifying from outside the vehicle whether the spoilers have varied, especially at night. Thus, there is a need for improvement to resolve these limitations.

The related art of the present disclosure is disclosed in Korean Patent Application Publication No. 10-2023-0035848 (published on March 14, 2023 and entitled "COMMUNICATION SPOILER SYSTEM OF VEHICLE AND SYSTEM CONTROL METHOD THEREOF").

US 2024/017665 A1 describes a vehicular active spoiler-type lighting device capable of providing lighting to a vehicle and in which an air current adjustment module protrudes to the outside according to need in order to improve vehicle traveling performance.

### SUMMARY

An objective of the present disclosure is to provide a variable spoiler lighting apparatus for a vehicle, which may improve aerodynamic performance of an electric vehicle and provide visual information to a driver, a nearby vehicle, and a pedestrian. According to the present invention, a variable spoiler lighting apparatus for a vehicle is set forth in claim 1 and preferred embodiments are provided in the dependent claims.

A variable spoiler lighting apparatus for a vehicle according to the present disclosure includes: a rear lamp, which is movably provided on a rear portion of the vehicle and protrudable toward a rear of the vehicle depending on a driving mode, and to which a rack is coupled; and a spoiler, which is movably provided on the rear portion, configured to move along with the rear lamp, and tiltable depending on the driving mode, wherein the rear portion includes a rear body accommodating the rear lamp and the spoiler and having a rail, to which the rack is movably coupled, to guide a movement of the rear lamp.

The rear portion may further include: a first actuator provided on the rear body and meshing with the rack to move the rack linearly along the rail; and a second actuator provided on the rear lamp and connected to the spoiler to vary a tilting angle of the spoiler.

The first actuator may include a first motor to which a first pinion meshing with the rack is rotatably coupled.

The second actuator may include: a second motor, which is secured to the rear lamp, and to which a second pinion is rotatably coupled; a gear meshing with the second pinion to be rotatable; and a link forming a link-connection between the gear and the spoiler and varying the tilting angle of the spoiler in response to a rotational motion of the gear.

The variable spoiler lighting apparatus for a vehicle may further include a bracket secured to the rear lamp, and to which the gear is rotatably coupled.

The link may include: a first link having a first side rotatably coupled to the gear and a second side rotatably coupled to a front side of the spoiler; and a second link rotatably coupled to the first link and having a first side rotatably coupled to the bracket and a second side rotatably coupled to a rear side of the spoiler.

The first link and the second link each may be composed of a plurality of unit connecting rods coupled in a linked-manner.

The variable spoiler lighting apparatus for a vehicle may further include a controller configured to separately control operations of the first actuator, the second actuator, and the rear lamp.

A pattern portion, illuminated with a light pattern, may be provided on an outer surface of the rear lamp so that whether the rear lamp is in operation is externally recognizable.

The rear lamp may include: one or more first lamps on which the spoiler is seated; and second lamps arranged on both sides of the first lamp, respectively.

The present disclosure may improve a driving range by minimizing air resistance, generated at the rear of the vehicle, through the rear lamp that protrudes toward the rear of the vehicle depending on the driving mode, and the spoiler that protrudes toward the rear of the vehicle along with the rear lamp and has a vertical tilting angle that varies depending on the driving mode.

In addition, the present disclosure may provide visual information to a driver of another vehicle or a pedestrian through the rear lamp that moves in a front-rear direction of the vehicle depending on the driving mode.

### BRIEF DESCRIPTION OF THE DRAWINGS

FIG. 1 is a perspective view showing Normal mode in a variable spoiler lighting apparatus for a vehicle according to embodiments of the present disclosure.
FIG. 2 is a perspective view showing GT1 mode in the variable spoiler lighting apparatus for a vehicle according to embodiments of the present disclosure.
FIG. 3 is a perspective view showing GT2 mode in the variable spoiler lighting apparatus for a vehicle according to embodiments of the present disclosure.
FIG. 4 is a perspective view showing Wet mode in the variable spoiler lighting apparatus for a vehicle according to embodiments of the present disclosure.
FIG. 5 is a front view showing the variable spoiler lighting apparatus for a vehicle according to embodiments of the present disclosure.
FIG. 6 is an enlarged perspective view of portion of FIG. 5.
FIGS. 7 to 9 are cross-sectional views of one side showing an operating status of a spoiler in the variable spoiler lighting apparatus for a vehicle according to embodiments of the present disclosure.
FIG. 10 is a block diagram showing an interconnection between a controller and each component in the variable spoiler lighting apparatus for a vehicle according to embodiments of the present disclosure.

### DETAILED DESCRIPTION

Exemplary embodiments of a variable spoiler lighting apparatus for a vehicle will be described below with reference to the accompanying drawings. It should be considered that the thickness of each line or the size of each component in the drawings may be exaggeratedly illustrated for clarity and convenience of description.

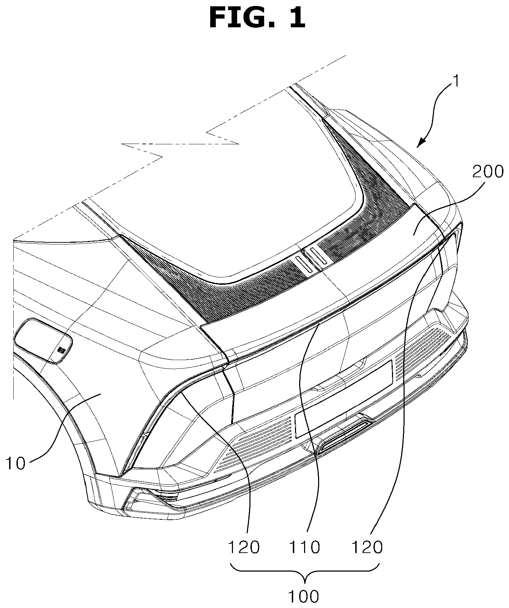

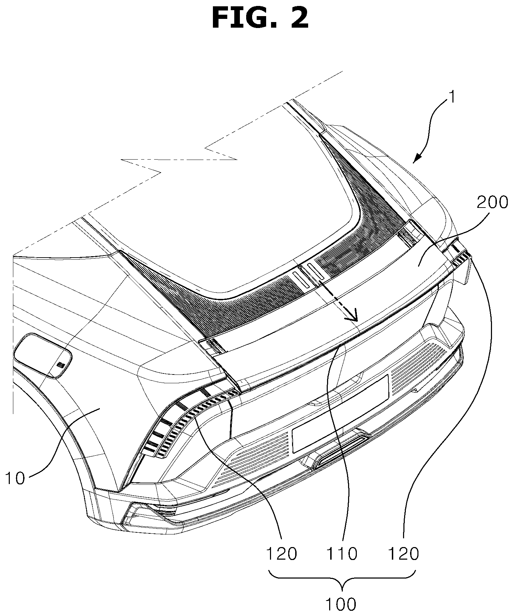

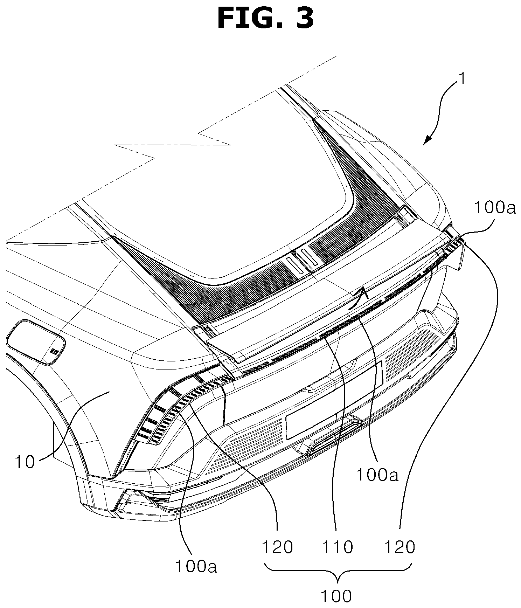

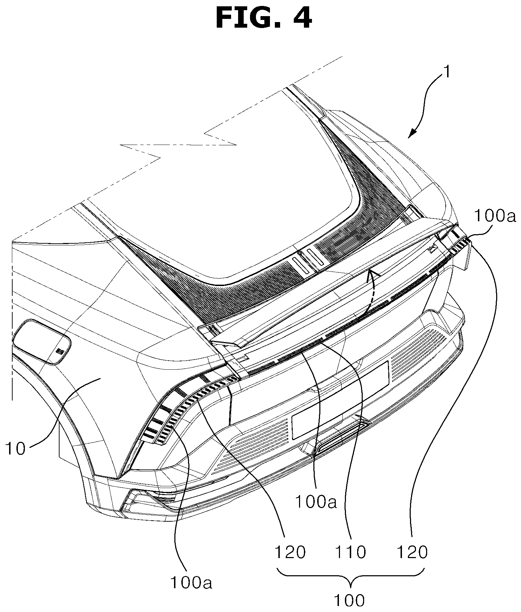

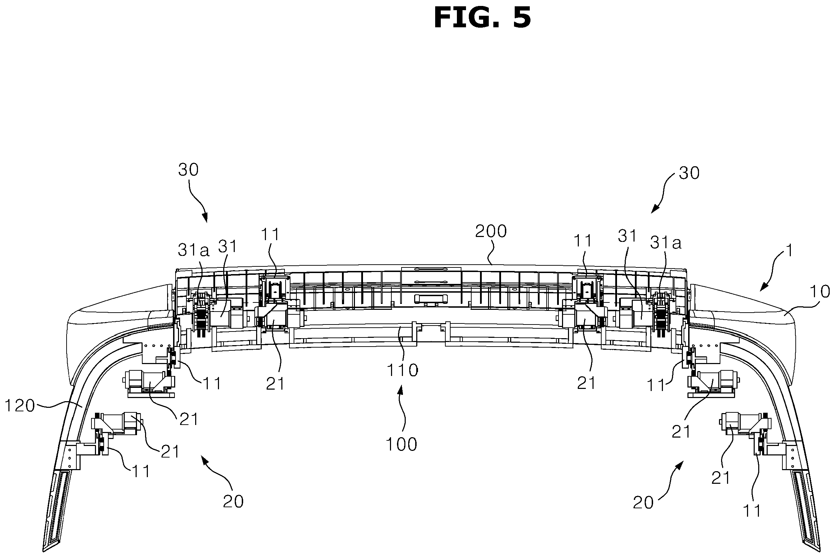

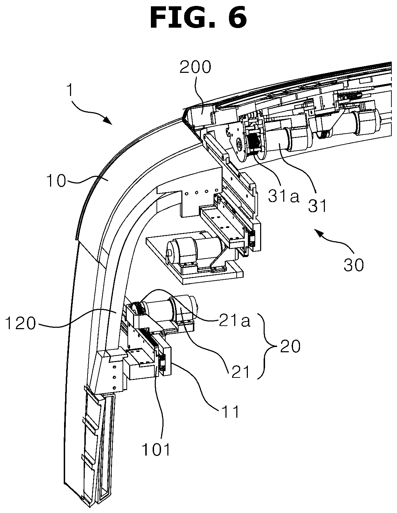

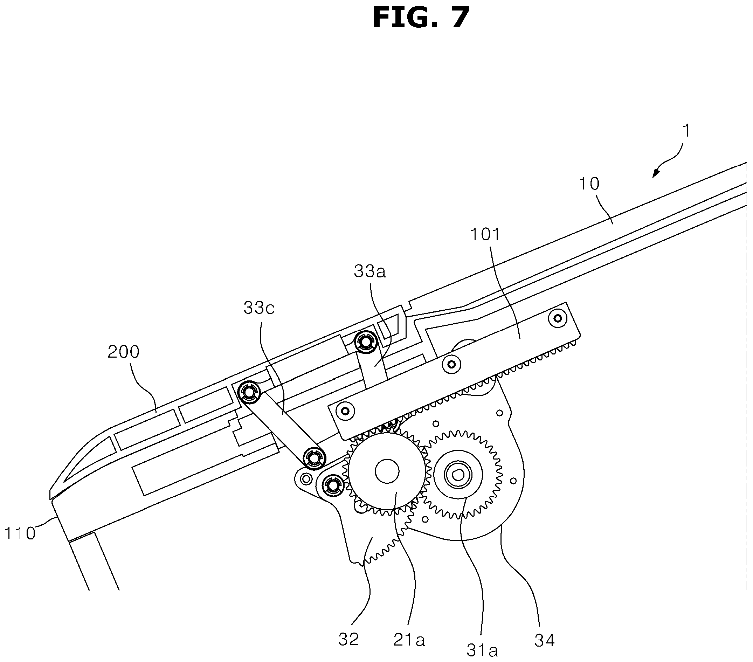

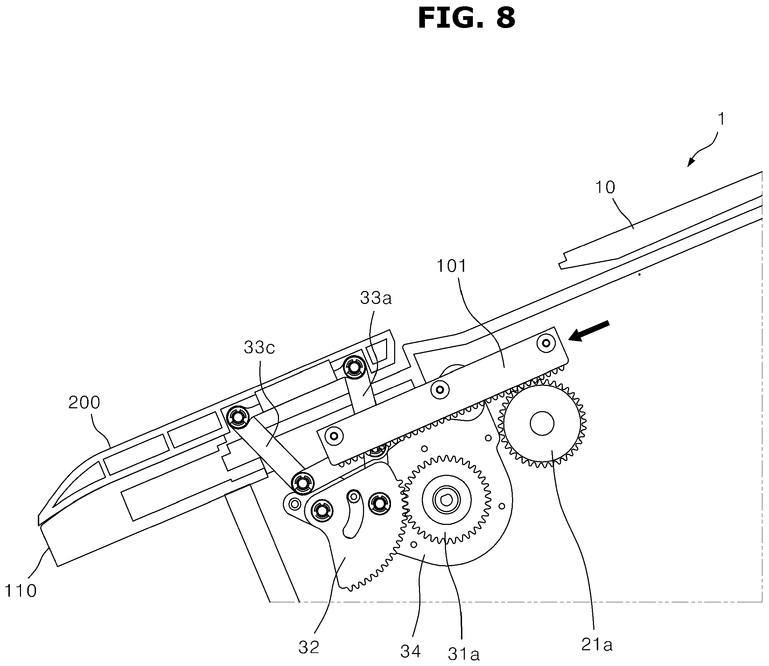

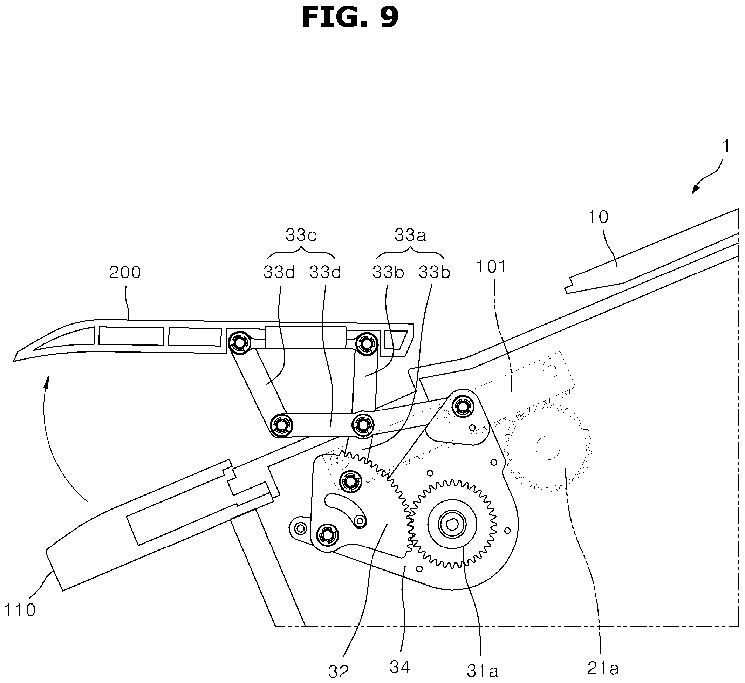

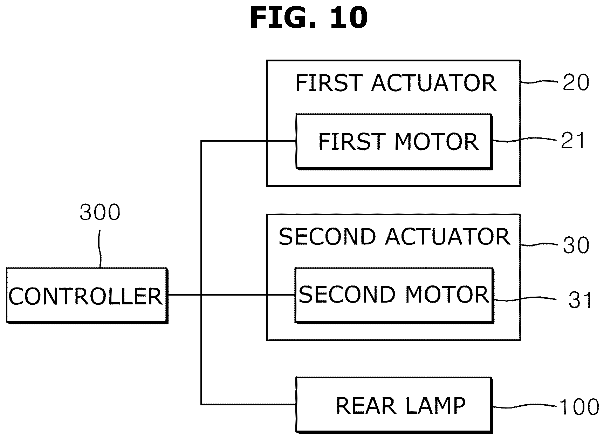

FIG. 1 is a perspective view showing Normal mode in a variable spoiler lighting apparatus for a vehicle according to embodiments of the present disclosure. FIG. 2 is a perspective view showing GT1 mode in the variable spoiler lighting apparatus for a vehicle according to embodiments of the present disclosure. FIG. 3 is a perspective view showing GT2 mode in the variable spoiler lighting apparatus for a vehicle according to embodiments of the present disclosure. FIG. 4 is a perspective view showing Wet mode in the variable spoiler lighting apparatus for a vehicle according to embodiments of the present disclosure. FIG. 5 is a front view showing the variable spoiler lighting apparatus for a vehicle according to embodiments of the present disclosure. FIG. 6 is an enlarged perspective view of portion of FIG. 5. FIGS. 7 to 9 are cross-sectional views of one side showing an operating status of a spoiler in the variable spoiler lighting apparatus for a vehicle according to embodiments of the present disclosure. FIG. 10 is a block diagram showing an interconnection between a controller and each component in the variable spoiler lighting apparatus for a vehicle according to embodiments of the present disclosure.

Referring to FIGS. 1 to 10, the variable spoiler lighting apparatus for a vehicle according to embodiments of the present disclosure includes a rear lamp 100, a spoiler 200, and a controller 300, which will described in detail below.

The rear lamp 100 may be movably provided on a rear portion 1 of a vehicle. The rear lamp 100 may emit light toward the rear of the vehicle. To be more specific, a line of light may be emitted through a rim of the rear lamp 100 facing the rear of the vehicle.

The rear lamp 100 may move in a front-rear direction of the vehicle depending on a driving mode of the vehicle, and may protrude toward the rear of the vehicle. Here, driving modes may include, for example, Normal mode, GT1 mode, GT2 mode, and Wet mode.

A rack 101 in a bar shape having a set length is coupled to the rear lamp 100. The rack 101 may be provided with gear teeth. The gear teeth may be formed on one surface of an outer side of the rack 101, and may be formed along a lengthwise direction of the rack 101. A plurality of the racks 101 may be arranged, along a width direction of the vehicle, to be spaced apart from each other.

The spoiler 200 is movably provided on the rear portion 1. The spoiler 200 is located on the rear lamp 100, and may move along with the rear lamp 100 in the front-rear direction of the vehicle depending on the driving mode of the vehicle.

The spoiler 200 may move along with the rear lamp 100 toward the rear of the vehicle, and then may be tilted in a vertical direction depending on the driving mode.

The rear portion 1 according to embodiments of the present disclosure includes a rear body 10, a first actuator 20, and a second actuator 30.

The rear body 10 accommodates the rear lamp 100 and the spoiler 200. To be more specific, the rear lamp 100 may be accommodated on an inner side of the rear body 10. An opening may be provided on an outer surface, facing the rear of the vehicle, of the rear body 10.

A rail 11, which guides a movement of the rear lamp 100 through the opening of the rear body 10, is provided on the inner side of the rear body 10. To be more specific, the rail 11 may be coupled to an inner surface of the rear body 10. A plurality of the rails 11 may be arranged, along the width direction of the vehicle, to be spaced apart from each other.

The rail 11 may be arranged in a straight line toward the front-rear direction of the vehicle. The rack 101 is slidably movably coupled to the rail 11. Thus, the rear lamp 100 may be exposed to the outside through the opening of the rear body 10. The spoiler 200 may be accommodated inside an opening provided on an upper portion of the rear body 10.

A pattern portion 100a, illuminated with a light pattern, may be provided on an outer surface of the rear lamp 100. The pattern portion 100a may be formed by laser etching an upper surface of the rear lamp 100.

When the rear lamp 100 is exposed through the opening of the rear body 10, the pattern portion 100a may be externally recognizable, thereby making it possible to externally check whether the rear lamp 100 is in operation. The rear lamp 100 may include one or more first lamps 110 and one or more second lamps 120.

The first lamp 110 may be arranged at a center portion of the rear body 10, and the spoiler 200 may be seated on the first lamp 110. The spoiler 200 may be rotatably coupled to the first lamp 110. The second lamps 120 may be arranged on both sides of the first lamp 110, respectively.

When the spoiler 200 seated on the first lamp 110 is tilted, the pattern portion 100a formed on the second lamp 120 and the pattern portion 100a formed on the first lamp 110 may be connected to form a pattern.

The first actuator 20 may be provided on the rear body 10. The first actuator 20 may mesh with the rack 101 to move the rack 101 linearly along the rail 11 toward the front-rear direction of the vehicle.

The first actuator 20 may include a first motor 21 to which a first pinion 21a meshing with the rack 101 is rotatably coupled. The first motor 21 may be secured to the inner side of the rear body 10. The first actuator 20 may convert a rotational motion of the first pinion 21a, which rotates by an operation of the first motor 21, into a linear motion of the rack 101.

The second actuator 30 may be provided on the rear lamp 100. The second actuator 30 may move along with the rear lamp 100. To be more specific, the second actuator 30 may be provided on the first lamp 110. Thus, the second actuator 30 may move along with the first lamp 110.

The second actuator 30 may be connected to the spoiler 200 to vary a vertical tilting angle of the spoiler 200 depending on the driving mode of the vehicle. The second actuator 30 may include a second motor 31, a gear 32, and a link 33.

The second motor 31 may be secured to the rear lamp 100. To be more specific, the second motor 31 may be secured to an outer surface of the first lamp 110. A second pinion 31a may be rotatably coupled to the second motor 31.

The gear 32 may mesh with the second pinion 31a to be rotatable. The gear 32 may be provided with gear teeth, which mesh with the second pinion 31a. The gear teeth may be formed on an outer peripheral surface of the gear 32, and may be formed along a circumferential direction of the gear 32.

The gear 32 may be rotatably coupled to a bracket 34, which is secured to the rear lamp 100. To be more specific, the bracket 34 may be secured to the first lamp 110.

The link 33 may form a link-connection between the gear 32 and the spoiler 200, and may vary the tilting angle of the spoiler 200 in response to a rotational motion of the gear 32. The link 33 may include a first link 33a and a second link 33c.

The first link 33a may be composed of a plurality of unit connecting rods 33b coupled in a linked-manner. A first side of the first link 33a may be rotatably coupled to the gear 32, and a second side of the first link 33a may be rotatably coupled to a front side, facing the front of the vehicle, of the spoiler 200.

The second link 33c may be composed of a plurality of unit connecting rods 33d coupled in a linked-manner. The second link 33c may be rotatably coupled to the first link 33a. To be more specific, the second link 33c may be interlocked with the first link 33a to tilt the spoiler 200.

A first side of the second link 33c may be rotatably coupled to the bracket 34, and a second side of the second link 33c may be rotatably coupled to a rear side, facing the rear of the vehicle, of the spoiler 200.

The controller 300 may separately control operations of the first actuator 20, the second actuator 30, and the rear lamp 100. The controller 300 may control the operations of the first actuator 20, the second actuator 30, and the rear lamp 100 depending on the driving mode that is automatically changed by receiving a signal generated from a vehicle speed sensor of the vehicle. The controller 300 may also control the operations of the first actuator 20, the second actuator 30, and the rear lamp 100 depending on the driving mode that is selected by a manual operation of an occupant.

The controller 300 may be electrically connected to the first actuator 20 to control the operation of the first actuator 20 so that the rear lamp 100 moves toward the front-rear direction of the vehicle. To be more specific, the controller 300 may be electrically connected to the first motor 21 to control the operation of the first motor 21 so that the first lamp 110 and the second lamp 120 move toward the front-rear direction of the vehicle.

The controller 300 may be electrically connected to the second actuator 30 and control the operation of the second actuator 30 to vary the tilting angle of the spoiler 200 so that the spoiler 200 tilts in the vertical direction. To be more specific, the controller 300 may be electrically connected to the second motor 31 and may control the operation of the second motor 31 to vary the tilting angle of the spoiler 200 such that the spoiler 200 tilts in the vertical direction.

The controller 300 may be electrically connected to the rear lamp 100 to control an on/off operation of the rear lamp 100. To be more specific, the controller 300 may control the first lamp 110 to be turned on or off depending on the driving mode of the vehicle.

The following is the description of an operation process of the variable spoiler lighting apparatus for a vehicle with the configuration described above according to embodiments of the present disclosure.

FIG. 1 is a perspective view showing Normal mode in the variable spoiler lighting apparatus for a vehicle according to embodiments of the present disclosure.

Referring to FIGS. 1 and 10, when the driving mode of the vehicle is set to Normal mode, the controller 300 may control the operation of the first actuator 20 to insert the rear lamp 100 into the inner side of the rear body 10 so that the rear lamp 100 does not protrude toward the rear of the vehicle. To be more specific, the controller 300 may control the operation of the first motor 21.

The spoiler 200, which moves along with the rear lamp 100, also does not protrude toward the rear of the vehicle, and the controller 300 may control the operation of the second actuator 30 so that the tilting angle of the spoiler 200 becomes 0 degrees. To be more specific, the controller 300 may control the operation of the second motor 31.

When the driving mode of the vehicle is set to Normal mode, the controller 300 may control the first lamp 110 to be turned off so that the first lamp 110 is turned off, and may control the second lamp 120 to be turned on so that the second lamp 120 is turned on.

FIG. 2 is a perspective view showing GT1 mode in the variable spoiler lighting apparatus for a vehicle according to embodiments of the present disclosure.

Referring to FIGS. 2 and 10, when the driving mode of the vehicle is set to GT1 mode, the controller 300 may control the operation of the first actuator 20 to expose the rear lamp 100, inserted into the inner side of the rear body 10, from the rear body 10 so that the rear lamp 100 protrudes toward the rear of the vehicle. To be more specific, the controller 300 may control the operation of the first motor 21.

The spoiler 200, which moves along with the rear lamp 100, also protrudes, along with the rear lamp 100, toward the rear of the vehicle, and the controller 300 may control the operation of the second actuator 30 so that the tilting angle of the spoiler 200 is maintained at 0 degrees. To be more specific, the controller 300 may control the operation of the second motor 31.

The movement of the rear lamp 100 may disperse vortices generated at the rear of the vehicle, thereby increasing a driving range.

When the driving mode of the vehicle is completed in GT1 mode, the controller 300 may control the first lamp 110 to be turned on so that the turned-off first lamp 110 is turned on, and may control the second lamp 120 so that the second lamp 120 continues to be turned on.

FIG. 3 is a perspective view showing GT2 mode in the variable spoiler lighting apparatus for a vehicle according to embodiments of the present disclosure.

Referring to FIGS. 3 and 10, when the driving mode of the vehicle is set to GT2 mode, the controller 300 may control the operation of the second actuator 30 so that the tilting angle of the spoiler 200 becomes about 40 degrees to about 45 degrees. To be more specific, the controller 300 may control the operation of the second motor 31.

The controller 300 may control the operation of the first actuator 20 so that the rear lamp 100, which has moved toward the rear of the vehicle, remains protruding toward the rear of the vehicle. To be more specific, the controller 300 may control the operation of the first motor 21.

When the vehicle is cruising or driving at a high speed, the tilting of the spoiler 200 may minimize air resistance by directing air flow farther to the rear of the vehicle than in Normal mode.

When the driving mode of the vehicle is completed in GT2 mode, the controller 300 may control the first lamp 110 to be turned on so that the first lamp 110, which is turned off by the control of the controller 300 when the spoiler 200 is tilted, is turned on. The controller 300 may also control the second lamp 120 so that the second lamp 120 continues to be turned on.

FIG. 4 is a perspective view showing Wet mode in the variable spoiler lighting apparatus for a vehicle according to embodiments of the present disclosure.

Referring to FIGS. 4 and 10, when the driving mode of the vehicle is set to Wet mode, the controller 300 may control the operation of the second actuator 30 so that the tilting angle of the spoiler 200 becomes about 80 degrees to about 90 degrees. To be more specific, the controller 300 may control the second motor 31.

The controller 300 may control the operation of the first actuator 20 so that the rear lamp 100, which has moved toward the rear of the vehicle, remains protruding toward the rear of the vehicle. To be more specific, the controller 300 may control the operation of the first motor 21.

When the vehicle is driving at a high speed or in extreme weather conditions, the tilting of the spoiler 200 may increase tire grip and enhance directional stability by pressing the airflow over the vehicle downward, thereby contributing to safe driving.

When the driving mode of the vehicle is completed in Wet mode, the controller 300 may control the first lamp 110 to be turned on so that the first lamp 110, which is turned off by the control of the controller 300 when the spoiler 200 is tilted, is turned on. The controller 300 may also control the second lamp 120 so that the second lamp 120 continues to be turned on.

The variable spoiler lighting apparatus for a vehicle according to embodiments of the present disclosure may improve the driving range by minimizing air resistance, generated at the rear of the vehicle, through the rear lamp 100 that protrudes toward the rear of the vehicle depending on the driving mode, and the spoiler 200 that protrudes toward the rear of the vehicle along with the rear lamp 100 and has a vertical tilting angle that varies depending on the driving mode.

The variable spoiler lighting apparatus for a vehicle according to embodiments of the present disclosure may provide visual information to a driver of another vehicle or a pedestrian through the rear lamp 100 that moves in the front-rear direction of the vehicle depending on the driving mode.

The present disclosure has been described with reference to the embodiments illustrated in the drawings, but these are only exemplary. Those skilled in the art to which the technology pertains should understand that various modifications and other equivalent embodiments may be made within the scope of the present invention defined by the following claims.

## Claims

1. A variable spoiler lighting apparatus for a vehicle comprising:
a rear lamp (100), which is movably provided on a rear portion (1) of the vehicle and protrudable toward a rear of the vehicle depending on a driving mode, and to which a rack (101) is coupled; and
a spoiler (200), which is movably provided on the rear portion (1), configured to move along with the rear lamp (100), and tiltable depending on the driving mode,
wherein the rear portion (1) comprises a rear body (10) accommodating the rear lamp (100) and the spoiler (200) and having a rail (11), to which the rack (101) is movably coupled, to guide a movement of the rear lamp (100).

2. The variable spoiler lighting apparatus of claim 1, wherein the rear portion (1) further comprises:
a first actuator (20) provided on the rear body (10) and meshing with the rack (101) to move the rack (101) linearly along the rail (11); and
a second actuator (30) provided on the rear lamp (100) and connected to the spoiler (200) to vary a tilting angle of the spoiler (200).

3. The variable spoiler lighting apparatus of claim 2, wherein the first actuator (20) comprises a first motor (21) to which a first pinion (21a) meshing with the rack (101) is rotatably coupled.

4. The variable spoiler lighting apparatus of claim 2 or 3, wherein the second actuator (30) comprises:
a second motor (31), which is secured to the rear lamp (100), and to which a second pinion (31a) is rotatably coupled;
a gear (32) meshing with the second pinion (31a) to be rotatable; and
a link (33) forming a link-connection between the gear (32) and the spoiler (200) and varying the tilting angle of the spoiler (200) in response to a rotational motion of the gear (32).

5. The variable spoiler lighting apparatus of claim 4, further comprising a bracket (34) secured to the rear lamp (100), and to which the gear (32) is rotatably coupled.

6. The variable spoiler lighting apparatus of claim 5, wherein the link (33) comprises:
a first link (33a) having a first side rotatably coupled to the gear (32) and a second side rotatably coupled to a front side of the spoiler (200); and
a second link (33c) rotatably coupled to the first link (33a) and having a first side rotatably coupled to the bracket (34) and a second side rotatably coupled to a rear side of the spoiler (200).

7. The variable spoiler lighting apparatus of claim 6, wherein the first link (33a) and the second link (33c) each are composed of a plurality of unit connecting rods (33b, 33d) coupled in a linked-manner.

8. The variable spoiler lighting apparatus of any one of claims 2 to 7, further comprising a controller (300) configured to separately control operations of the first actuator (20), the second actuator (30), and the rear lamp (100).

9. The variable spoiler lighting apparatus of any one of claims 1 to 8, wherein a pattern portion (100a), illuminated with a light pattern, is provided on an outer surface of the rear lamp (100) so that whether the rear lamp (100) is in operation is externally recognizable.

10. The variable spoiler lighting apparatus of any one of claims 1 to 9, wherein the rear lamp (100) comprises:
one or more first lamps (110) on which the spoiler (200) is seated; and
second lamps (120) arranged on both sides of the first lamp, respectively.

## Patentansprüche

1. Variable Spoilerbeleuchtungsvorrichtung für ein Fahrzeug, umfassend:
eine Heckleuchte (100), die beweglich an einem Heckabschnitt (1) des Fahrzeugs vorgesehen ist und in Abhängigkeit von einem Fahrmodus in Richtung eines Hecks des Fahrzeugs ausfahrbar ist und mit der eine Zahnstange (101) gekoppelt ist; und
einen Spoiler (200), der beweglich an dem Heckabschnitt (1) vorgesehen ist, der so eingerichtet ist, dass er sich zusammen mit der Heckleuchte (100) bewegt, und in Abhängigkeit von dem Fahrmodus neigbar ist,
wobei der Heckabschnitt (1) einen Heckkörper (10) umfasst, der die Heckleuchte (100) und den Spoiler (200) aufnimmt und eine Schiene (11) aufweist, mit der die Zahnstange (101) beweglich gekoppelt ist, um eine Bewegung der Heckleuchte (100) zu führen.

2. Variable Spoilerbeleuchtungsvorrichtung nach Anspruch 1, wobei der Heckabschnitt (1) ferner umfasst:
einen ersten Aktuator (20), der an dem Heckkörper (10) vorgesehen ist und mit der Zahnstange (101) kämmt, um die Zahnstange (101) linear entlang der Schiene (11) zu bewegen; und
einen zweiten Aktuator (30), der an der Heckleuchte (100) vorgesehen und mit dem Spoiler (200) verbunden ist, um einen Neigungswinkel des Spoilers (200) zu variieren.

3. Variable Spoilerbeleuchtungsvorrichtung nach Anspruch 2, wobei der erste Aktuator (20) einen ersten Motor (21) umfasst, mit dem ein erstes Ritzel (21a), das mit der Zahnstange (101) kämmt, drehbar gekoppelt ist.

4. Variable Spoilerbeleuchtungsvorrichtung nach Anspruch 2 oder 3, wobei der zweite Aktuator (30) umfasst:
einen zweiten Motor (31), der an der Heckleuchte (100) befestigt ist und mit dem ein zweites Ritzel (31a) drehbar gekoppelt ist;
ein Zahnrad (32), das mit dem zweiten Ritzel (31a) kämmt, um drehbar zu sein; und
ein Verbindungsglied (33), das eine Gelenkverbindung zwischen dem Zahnrad (32) und dem Spoiler (200) bildet und den Neigungswinkel des Spoilers (200) in Reaktion auf eine Drehbewegung des Zahnrads (32) variiert.

5. Variable Spoilerbeleuchtungsvorrichtung nach Anspruch 4, ferner umfassend eine Halterung (34), die an der Heckleuchte (100) befestigt ist und mit der das Zahnrad (32) drehbar gekoppelt ist.

6. Variable Spoilerbeleuchtungsvorrichtung nach Anspruch 5, wobei das Verbindungsglied (33) umfasst:
ein erstes Verbindungsglied (33a), das eine erste Seite, die drehbar mit dem Zahnrad (32) gekoppelt ist, und eine zweite Seite aufweist, die drehbar mit einer Vorderseite des Spoilers (200) gekoppelt ist; und
ein zweites Verbindungsglied (33c), das drehbar mit dem ersten Verbindungsglied (33a) gekoppelt ist und eine erste Seite, die drehbar mit der Halterung (34) gekoppelt ist, und eine zweite Seite aufweist, die drehbar mit einer Rückseite des Spoilers (200) gekoppelt ist.

7. Variable Spoilerbeleuchtungsvorrichtung nach Anspruch 6, wobei das erste Verbindungsglied (33a) und das zweite Verbindungsglied (33c) jeweils aus einer Mehrzahl von Verbindungsstangenelementen (33b, 33d) bestehen, die gelenkig miteinander gekoppelt sind.

8. Variable Spoilerbeleuchtungsvorrichtung nach einem der Ansprüche 2 bis 7, ferner umfassend eine Steuerung (300), die so eingerichtet ist, dass sie Betriebsvorgänge des ersten Aktuators (20), des zweiten Aktuators (30) und der Heckleuchte (100) separat steuert.

9. Variable Spoilerbeleuchtungsvorrichtung nach einem der Ansprüche 1 bis 8, wobei ein Musterabschnitt (100a), der mit einem Lichtmuster beleuchtet wird, an einer Außenfläche der Heckleuchte (100) vorgesehen ist, sodass von außen erkennbar ist, ob die Heckleuchte (100) in Betrieb ist.

10. Variable Spoilerbeleuchtungsvorrichtung nach einem der Ansprüche 1 bis 9, wobei die Heckleuchte (100) umfasst:
eine oder mehrere erste Leuchten (110), auf denen der Spoiler (200) sitzt; und
zweite Leuchten (120), die jeweils auf einer der beiden Seiten der ersten Leuchte angeordnet sind.

## Revendications

1. Appareil d'éclairage à déflecteur variable pour un véhicule comprenant:
un feu arrière (100), qui est monté mobile sur une partie arrière (1) du véhicule et qui peut faire saillie vers l'arrière du véhicule en fonction d'un mode de conduite, et auquel est couplée une crémaillère (101); et
un déflecteur (200), monté mobile sur la partie arrière (1), conçu pour se déplacer conjointement avec le feu arrière (100) et pouvant s'incliner en fonction du mode de conduite,
dans lequel la partie arrière (1) comprend un corps arrière (10) logeant le feu arrière (100) et le déflecteur (200) et comportant un rail (11), auquel la crémaillère (101) est couplée de manière mobile, afin de guider le déplacement du feu arrière (100).

2. Appareil d'éclairage à déflecteur variable selon la revendication 1, dans lequel la partie arrière (1) comprend en outre:
un premier actionneur (20) monté sur le corps arrière (10) et s'engrenant avec la crémaillère (101) afin de déplacer la crémaillère (101) de manière linéaire le long du rail (11); et
un deuxième actionneur (30) disposé dans le feu arrière (100) et relié au déflecteur (200) afin de modifier l'angle d'inclinaison du déflecteur (200).

3. Appareil d'éclairage à déflecteur variable selon la revendication 2, dans lequel le premier actionneur (20) comprend un premier moteur (21) auquel est couplé de manière rotative un premier pignon (21a) s'engrenant avec la crémaillère (101).

4. Appareil d'éclairage à déflecteur variable selon la revendication 2 ou 3, dans lequel le deuxième actionneur (1) comprend:
un deuxième moteur (31), qui est fixé au feu arrière (100) et auquel un deuxième pignon (31a) est accouplé de manière rotative;
une roue dentée (32) s'engrenant avec le deuxième pignon (31a) de manière rotative; et
une biellette (33) assurant la liaison entre la roue dentée (32) et le déflecteur (200) et modifiant l'angle d'inclinaison du déflecteur (200) en réponse à la rotation de la roue dentée (32).

5. Appareil d'éclairage à déflecteur variable selon la revendication 4, comprenant en outre un support (34) fixé au feu arrière (100), et auquel la roue dentée (32) est couplé de manière rotative.

6. Appareil d'éclairage à déflecteur variable selon la revendication 5, dans lequel la biellette (33) comprend:
une première biellette (33a) dont un premier côté est couplé de manière rotative à la roue dentée (32) et dont un second côté est couplé de manière rotative à un côté avant du déflecteur (200); et
une deuxième biellette (33a) couplée de manière rotative à la première biellette (33a) et dont un premier côté est couplé de manière rotative au support (34) et un deuxième côté couplé de manière rotative à un côté arrière du déflecteur (200).

7. Appareil d'éclairage à déflecteur variable selon la revendication 6, dans lequel la première biellette (33a) et la deuxième biellette (33c) sont chacune composés d'une pluralité de tiges de liaison individuelles (33b, 33d) reliées entre elles de manière articulée.

8. Appareil d'éclairage à déflecteur variable selon l'un quelconque des revendications 2 à 7, comprenant en outre un organe de commande (300) conçu pour commander séparément les opérations de commande du premier actionneur (20), du deuxième actionneur (30), et du feu arrière (100).

9. Appareil d'éclairage à déflecteur variable selon l'un quelconque des revendications 1 à 8, dans lequel une partie à motifs (100a), éclairée par un motif lumineux, est disposée sur une surface extérieure du feu arrière (100) de manière à permettre de reconnaître de l'extérieur si le feu arrière (100) est allumé.

10. Appareil d'éclairage à déflecteur variable selon l'une quelconque des revendications 1 à 9, dans lequel le feu arrière (100) comprend:
un ou plusieurs feux (110) sur lequel est monté le déflecteur (200); et
des deuxième feu (120) disposés respectivement de part et d'autre du premier feu (110).
